# EUROPEAN PATENT SPECIFICATION

(11) **EP 1 412 665 B1**
(45) Date of publication and mention of the grant of the patent: **05.07.2006**
(21) Application number: 02791432.4
(22) Date of filing: 05.08.2002
(51) Int. Cl.: F16L 1/12, E21B 43/01

(54) **A BENDING-RESTRICTING ANCHORING ARRANGEMENT AND AN ANCHORED FLEXIBLE PIPE STRUCTURE**
BIEGUNGSBEGRENZUNGS-VERANKERUNGSANORDNUNG UND VERANKERTE FLEXIBLE ROHRKONSTRUKTION
SYSTEME D'ANCRAGE LIMITANT LA FLEXION ET STRUCTURE DE CONDUITE SOUPLE ANCREE

(30) Priority: 03.08.2001 DK 200101174
(43) Date of publication of application: 28.04.2004
(73) Proprietor: NKT Flexibles I/S, 2605 Brondby (DK)
(72) Inventor: PEDERSEN, Tommy, DK-2300 Copenhagen S (DK)
(74) Representative: Hegner, Anette
(86) International application number: PCT/DK2002/000524
(87) International publication number: WO 2003/012327

(56) References cited:
- EP-A- 1 035 011
- US-A- 4 263 004
- US-A- 4 906 137

## Description

The invention relates to a bending-restricting anchoring arrangement for anchoring a flexible pipe between a surface vessel and subsea installation. The pipe can e.g. be anchored to the seabed or to another fixed structure. The invention also relates to an anchored flexible structure.

An anchoring arrangement for minimizing overbending of a pipe is known e.g. from US Patent No. 4 906 137. This anchoring arrangement comprises two collars which are changed to the pipe. The collars are connected to a deadman by anchoring tie rods. In this anchoring arrangement, all parts of the pipe disposed between the first anchoring point and a fixed end point must be in the same plane. In addition, the angle of the part of the pipe, which is positioned in immediate extension of the first anchoring point and projected on the plane spanned by the lower part of the pipe between the first anchoring point and the fixed end point, must be within narrow limits. In other words, it must be ensured that this part of the pipe, when being bent does not result in an overbending of the pipe between the first anchoring point and the fixed point.

An object of the invention is to provide a bending-restricting anchoring arrangement for anchoring of a flexible pipe wherein the risk of overbending the pipe is reduced or even avoided.

The object of the invention is achieved by a bending-restricting anchoring arrangement of the type defined in the claims.

Thus, according to the invention the bending-restricting anchoring arrangement comprises a first and a second holding sleeve. The holding sleeve being secured to the pipe at a distance from each other e.g. 0.5-20 or 1-10 meters. The distance can be selected in dependence of the thickness of the pipe, the flexibility of the pipe and the expected bending inducing movement of the pipe. The sleeves may e.g. be adapted to hold a section of the pipe near the seabed. The first holding sleeve is pivotally secured via a rigid main connecting member to a main anchoring unit to which the pipe is to be anchored. The first holding sleeve is thereby secured at a fixed distance to the main anchoring unit. The distance and thereby the length of the main anchoring unit may preferably be between 1 and 19 m, such as between 1 and 10 m. In a preferred embodiment the length of the main anchoring unit is between 10 an 90 % of the length of the distance between the first and the second sleeves when they are mounted to a pipe. The first sleeve is movable with respect to the main anchoring unit, but the distance is fixed.

In one embodiment, the second holding sleeve is secured to the first holding sleeve via a mechanical coupling (11). The mechanical coupling may in principle be any kind of mechanical coupling which is capable of transferring movements of the first holding sleeve and thereby movements of the rigid main connecting member to the second holding sleeve and visa verse. Thereby the second holding sleeve may be movable in a well-defined manner in relation to the movement of the main rigid connecting member.

In one embodiment, the second holding sleeve is secured to the first holding sleeve via a mechanical coupling (11) and the main rigid connecting member (5). In this embodiment the mechanical coupling is interposed between the second holding sleeve and the rigid main connecting member. The mechanical coupling may be as above. Thereby the second holding sleeve may be movable in a well-defined manner in relation to the movement to the movement of the main rigid connecting member.

Thus, according to the invention also the second holding sleeve is movable with respect to the main anchoring unit, and the movements is coordinated with the movement of the rigid connecting member. Thus, an anchoring arrangement has been provided whereby the first and the second holding sleeves being movable with respect to the main anchoring unit, and wherein the movement of the two holding sleeves being coordinated with each other, so that the risk of overbending of the pipe is very small or even practically avoided.

The anchoring unit may e.g. be fixed to the seabed or to another fix point e.g. a subsea structure.

In one embodiment where the pipe has a lower section is adapted to be placed along the seabed, and a upper section leading the pipe to a surface vessel, and the anchoring arrangement is placed or adapted to be placed in its curved transition section, the transition section of the pipe will maintain its curved shape, as forces affecting the first holding sleeve will cause the second holding sleeve to move in a well-defined manner in relation to the first holding sleeve, such that the transition section of the pipe is not subjected to harmful bending forces.

The connections between, respectively, the main connection member to the main anchoring unit and the holding sleeve, as well as other connections, which are connecting connecting members to the respective elements of the anchoring arrangements may in principle be of any type, provided that the pivotally movements as defined in the claims being possibly. In one embodiment one or more of this connection may e.g. be provided with one or more hinge joint, and ball-socket joint

In one embodiment the main rigid connecting member is secured to the main anchoring unit by a hinge joint, said main rigid connecting member (5) preferably being secured to the secured first (2) holding sleeve by a hinge joint.

In one embodiment of the anchoring arrangement according to the invention, the second holding sleeve is connected to the anchoring unit by a sleeve support. The sleeve support should preferably be movable along the anchoring unit. In this embodiment it is preferred that the anchoring unit comprise a protruding floor adapted to be placed on and along the seabed and that the movable support is connected to the protruding floor and is movable along the protruding floor. The sleeve support may e.g. be connected to be movable along a slit. In one embodiment the sleeve support is provided with wheel, and the connection is provided by the weight of the pipe, so that the sleeve support is capable to move along the protruding floor e.g. with an area of the floor limited with a borderline along the protruding floor. In a variation of this embodiment the protruding floor is replaced be a separate floor separated from the anchoring unit but placed with a fixed distance to the anchoring unit.

In the above embodiments comprising a sleeve is ensured that the axial forces provided on the lower part of the pipe is reduced, and thereby the lower part of the pipe may not have to absorb considerable, axial forces.

In one embodiment of the invention, the mechanical coupling comprise one secondary rigid connection member, which is pivotally connecting the second holding sleeve to the first holding sleeve or the main rigid connecting member. In this embodiment the second holding sleeve may advantageously be supported by a sleeve support as described above. This structure is relatively easy to implement and thereby relatively cheap.

In one embodiment of the invention, wherein the secondary rigid connection member is connected to the second holding sleeve and to the main rigid connecting member, the connection between the secondary rigid connection member and the main rigid connecting member may be provided at a substantially distance to the connections between the main rigid connecting member and the anchoring unit. The closer the connection is placed to the first holding sleeve, the more of the movements of the first holding sleeve relative to the main anchoring unit will be transferred to the second holding sleeve. In one embodiment it is desired that the distance of the connection between the secondary rigid connection to the second holding sleeve and the main rigid connecting member to the anchoring unit is at least 10 % such as at least 15 %, such as between 25 and 95 % of the length of the main rigid connecting member between the respective connections to the first holding sleeve and the anchoring unit.

In one embodiment of the anchoring arrangement according to the invention the mechanical coupling comprise one or more secondary rigid connection members pivotally connecting the second holding sleeve to the first holding sleeve or the main rigid connecting member (5). If there is more than one secondary rigid connection members these secondary rigid connection members may e.g. be pivotally connected to each other.

In one embodiment where there is more than one secondary rigid connection members pivotally connected to each other, it is desired that the anchoring arrangement, for each connection members more than one, which are pivotally connected to each other and directly connects the second holding sleeve to the first holding sleeve or the main rigid connection member, the mechanical coupling comprises an additional secondary rigid connection member linking the pivotally connected connection members that directly connecting the second holding sleeve to the first holding sleeve or the main rigid connection member, to a fixed point in relation to the main anchoring unit, e.g. to the main anchoring unit or to a secondary anchoring unit fixed to the seabed.

Thereby it is ensured that a movement provided by the first sleeve will be transferred to the second sleeve.

The above embodiment where the mechanical coupling comprises two or more secondary rigid connection members, anchoring arrangements are provided which are suitable in particular where the conditions of the bed are not suitable for supporting a movable support lying on the bed.

In one embodiment according to the invention, wherein the mechanical coupling comprise 3 secondary rigid connection members, a second, a third and a fourth rigid members, and wherein the second rigid member is pivotally connected to the first holding sleeve or to the rigid main connecting member, and to the fourth rigid member, and the fourth rigid member further is pivotally connected to the first holding sleeve, the third rigid member is pivotally connecting the connected second and fourth rigid members to an anchoring unit. The anchoring unit may e.g. be the main anchor unit or it may be a secondary anchoring unit, which may or may not be linked to the main anchoring unit. In use the main and the secondary anchoring unit or units should preferably be place with a fixed distance to each other, more preferably the anchoring unit should be fixed in position relative to each other.

In this just described embodiment wherein, the second rigid member is pivotally secured to the main rigid connecting member, the connection between the second rigid connection member and the main rigid connecting member may e.g. be provided at a substantially distance to the connection between the main rigid connecting member and the anchoring unit, e.g. at a distance of at least 10 %, such as at least 15 %, such as between 25 and 95% or even up to 100 % of the length of the main rigid connecting member between the respective connections to the first holding sleeve and the anchoring unit.

The invention also relates to an anchored flexible pipe structure for the transport of a fluid from a seabed to a sea surface, wherein the structure comprising a bending-restricting anchoring arrangement as described above.

In one embodiment the pipe is secured to the seabed between its two ends, a first end of the pipe being in liquid connection with a subsea installation such, as an oil field installation, and a second end of the pipe being in liquid connection with a surface vessel, such as a floating structure e.g. a platform or a ship.

The pipe may be any type of pipe e.g. a reinforced flexible pipe.

The invention will now be explained more fully with reference to the embodiments shown in the drawing, in which
- fig. 1: shows the basic structure of a bending-restricting attachment arrangement according to the invention,
- fig. 2: shows a first embodiment of the bending-restricting attachment arrangement according to the invention,
- figs. 2a, 2b: show the embodiment of fig. 2 seen from the left and in two positions,
- fig. 3a: shows a second embodiment of the bending-restricting attachment arrangement according to the invention,
- fig. 3b: shows a variant of the embodiment of fig. 3a, while
- fig. 4: shows the bending-restricting attachment arrangement incorporated in an offshore system.

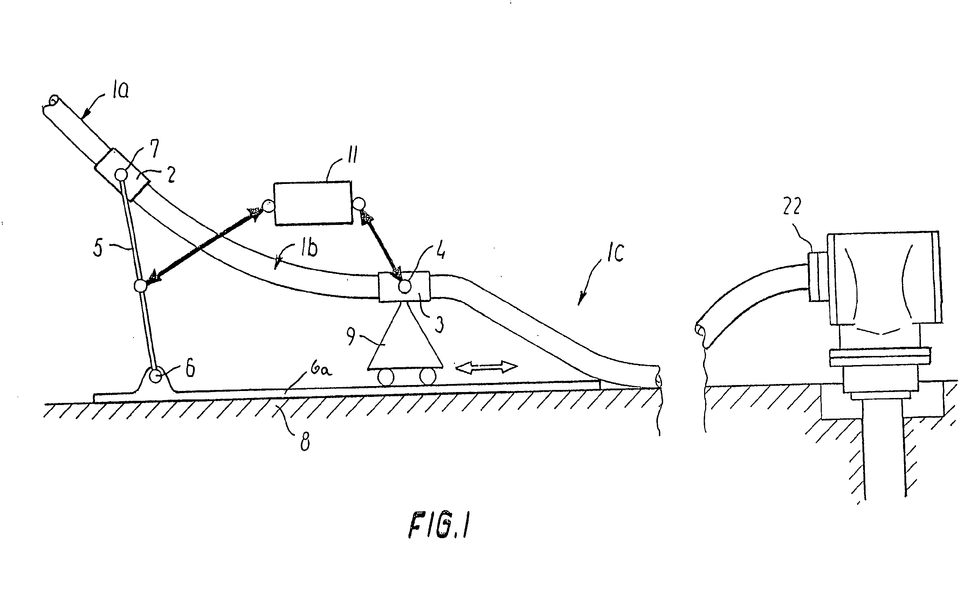

In fig. 1, 1a, 1b, 1c designate three sections of a pipe, e.g. a pipe for use in connection with offshore installations. The pipe has a lower section 1c adapted to be placed along the seabed, and a upper section 1a leading the pipe to a surface vessel, and a curved transition section 1b.

A holding sleeve 2 is mounted on the pipe between the sections 1a and 1b, capable of absorbing most of or all the tensile forces that affect it. 5 designates a main rigid connecting member whose one end 7 is secured to the holding sleeve 2, while its other end 6 is secured by means of a hinge to a fixed anchoring unit 6 on a seabed 8.

A second attachment sleeve 3 is secured on the pipe between the sections 1b and 1c, and this second attachment sleeve is secured at an attachment point 4 to a movable sleeve support 9.

A mechanical coupling 11 is arranged between the holding sleeves 2 and 3, which is shown here as a coupling whose one end is secured (shown symbolically by a black arrow) to the main rigid member 5, while its other end (also shown symbolically by a black arrow) is secured to the second connecting sleeve 3.

The arrangement shown in fig. 1 operates in the manner that movements of the main rigid member 5 will result in a movement of the attachment sleeve 3 which may be a rotary or translatory movement or combinations of these.

Because of the movement of the attachment sleeve 3 it is desired that the third section 1c of the pipe between the attachment sleeve 3 and a rigid fixation 22 has a certain mobility. In the shown embodiment, the sleeve support is supplied with wheels and is placed on a protruding part 6a of the anchoring unit 6. Several methods may be applied for ensuring this mobility, the preferred method being to place the anchoring unit such that the section 1c of the pipe does have its concave part facing toward the rigid fixation 22 of the pipe.

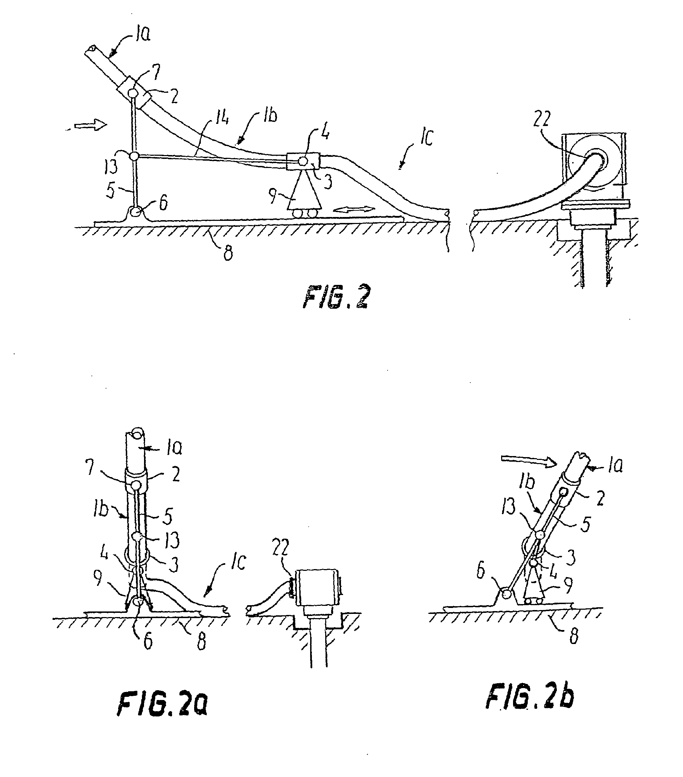

Fig. 2 shows an embodiment of the invention in which the mechanical coupling between the main rigid connecting member 5 and the movable, secondary holding sleeve 3 of the pipe is formed by a further rigid member 14.

Figs. 2a and 2b show the structure of fig. 2 seen from the left, where fig. 2a shows a position in which the main rigid member 5 is in a vertical position, while in fig. 2b it is shown with a bend caused by the application of a force. This bend is possible since, as mentioned, the main rigid member 5 is hinged to the bed.

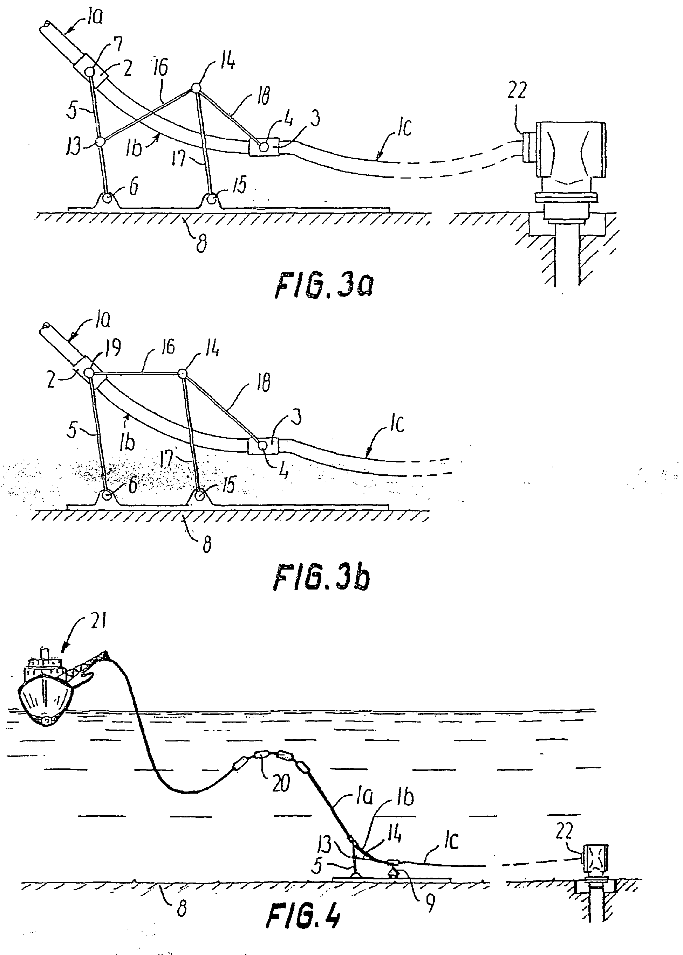

Figs. 3a and 3b show two embodiments in which the mechanical coupling between the attachment sleeves 2, 3 includes 3 secondary rigid members 16, 17 and 19.

A second rigid member 16 extends from a position 13 on the main rigid member 5 or a position 19 on the first holding sleeve 2, and has its opposite end secured to one end of third 17 and fourth 18 rigid members at a link 14. The other end of the third rigid member is hinged to the seabed at the point 15, while the fourth 18 rigid member is connected to the second holding sleeve 3.

In fig. 4, the embodiment of the invention of fig. 1 is shown in a setup in which a flexible pipe extends from a vessel 21. As will be seen, the flexible pipe extends in chain line shape from the vessel 21 down to a fixed installation on the seabed. The flexible pipe is provided with buoyancy members 20 in the vicinity of the section 1 a of the flexible pipe and in a direction toward the vessel 21, as is known.

Although the invention has been explained in connection with specific embodiments, the mechanical coupling according to the invention may be modified within the scope of the claims. The decisive point is that the holding sleeves are coupled together such that the pipe section 1b cannot be bent unduly.

## Claims

1. A bending-restricting anchoring arrangement for anchoring of a flexible pipe (1a, 1b, 1c), said anchoring arrangement comprises a first (2) and a second (3) holding sleeve, each holding sleeve, spaced from each other, capable of being secured to the pipe, said first (2) holding sleeve being pivotally secured via a rigid main connecting member (5) to a main anchoring unit (6) fixed directly or in a stiff connection to the seabed to which the pipe is to be anchored, said second (3) holding sleeve being secured to the first (2) holding sleeve via a mechanical coupling (11), which mechanical coupling (11) ensures that any movement provided by the first holding sleeve (2) will be at least partly transferred to the second holding sleeve (3), the movement of the second (3) holding sleeve thereby being coordinated with the movement of the first holding sleeve and thereby the movement of the rigid connecting member.

2. An anchoring arrangement according to claim 1, **characterized in that** the mechanical coupling (11) being connected to the rigid main connecting member (5).

3. An anchoring arrangement according to any one of the claims 1 and 2, **characterized in that** the main rigid connecting member (5) is secured to the main anchoring unit (6) by a hinge joint,

4. An anchoring arrangement according to claim 3 **characterized in that** said main rigid connecting member (5) being secured to the first (2) holding sleeve by a hinge joint.

5. An anchoring arrangement according to any one of the claims 1-4, **characterized in that** the second holding sleeve (3) being connected to the anchoring unit (6) by a sleeve support (9), which sleeve support being movable along the anchoring unit (6).

6. An anchoring arrangement according to claim 5 **characterized in that** said anchoring unit (6) comprises protruding floor (6a) adapted to be placed on and along the seabed (8), said movable support (9) being connected to the protruding floor (6a) and being movable along the protruding floor (6a).

7. An anchoring arrangement according to any one of the claims 1-6, wherein the mechanical coupling comprises one or more secondary rigid connection members (14, 16, 17, 18) pivotally connecting the second (3) holding sleeve to the first (2) holding sleeve or the main rigid connecting member (5)

8. An anchoring arrangement according to claim 7 **characterized in that** said secondary rigid connection members if more than one, being pivotally connected to each other.

9. An anchoring arrangement according to any one of the claims 1-8, wherein the mechanical coupling comprises one secondary rigid connection member (14,) pivotally connecting the second (3) holding sleeve to the first (2) holding sleeve or the main rigid connecting member (5).

10. An anchoring arrangement according to claim 9, wherein said secondary rigid connection member (14) being connected to the second (3) holding sleeve and to the main rigid connecting member (5), said connection of the secondary rigid connection member (14) to the main rigid connecting member (5) being at a substantially distance to the connection between the main rigid connecting member (5) and the anchoring unit (6), wherein a substantially distance means at least 10 %, of the length of the main rigid connecting member (5) between the respective connections to the first (3) holding sleeve and the anchoring unit (6).

11. An anchoring arrangement according to any one of the claims 1 - 8, wherein the mechanical coupling (11) comprises 3 secondary rigid connection members, a second (16), a third (17) and a fourth (18) rigid members, wherein the second (16) rigid member is pivotally connected to the first holding sleeve (2) or the rigid main connecting member (5), and to the fourth rigid member (17), which fourth rigid member further is pivotally connected to the first (3) holding sleeve, the third rigid member (17) is pivotally connecting the connected second and fourth rigid members to an anchoring unit (15).

12. An anchoring arrangement according to claim 11 **characterized in that** said anchoring unit being a secondary anchoring unit.

13. An anchoring arrangement according to any one of the claims 11 and 12 **characterized in that**, the second (16) rigid member being pivotally secured to the rigid main connecting member (5), at a substantially distance to the connection between the main rigid connecting member (5) and the anchoring unit (6), wherein a substantially distance means at least 10 %, of the length of the main rigid connecting member (5) between the respective connections to the first (3) holding sleeve and the anchoring unit (6).

14. An anchored flexible pipe structure for the transport of a fluid between a seabed to a sea surface, comprising a bending-restricting anchoring arrangement according to any one of the preceding claims.

15. An anchored flexible pipe structure for the transport of a fluid between a seabed to a sea surface, said structure comprises a flexible pipe (1a, 1b, 1c) and an anchoring arrangement for anchoring the flexible pipe (1a, 1b, 1c) to the seabed (8), said anchoring arrangement comprise a first (2) and second (3) holding sleeves, each holding sleeve, spaced from each other, is secured to the pipe, said first (2) holding sleeve being pivotally secured via a rigid main connecting member (5) to a main anchoring unit (6) to which the pipe is thereby anchored, said second (3) holding sleeve being secured to the first (2) holding sleeve via a mechanical coupling (11), which mechanical coupling (11) can transfer movements from the first holding sleeve (2) to the second holding sleeve (3), the movement of the second (3) holding sleeve and the rigid connecting member (5) thereby being coordinated with each other.

16. An anchored flexible pipe structure according to claim 15, wherein said anchoring arrangement being as defined in any one of the claims 2-13.

17. An anchored flexible pipe structure according to any one of the claims 15 and 16, wherein the pipe is secured to the seabed (8) between its two ends, a first end of the pipe being in liquid connection with a subsea installation, and a second end of the pipe being in liquid connection with a surface vessel.

18. An anchored flexible pipe structure according to claim 17 wherein the surface vessel being a floating structure.

## Patentansprüche

1. Biegebegrenzungs-Verankerungsanordnung zum Verankern eines flexiblen Rohrs (1 a, 1b, 1c), wobei die Verankerungsanordnung eine erste (2) und eine zweite (3) Laufbuchse aufweist, die jeweils in Abstand voneinander angeordnet und an dem Rohr befestigbar sind, wobei die erste Laufbuchse (2) über ein starres Hauptverbindungselement (5) schwenkbar an einer Hauptverankerungseinheit (6) befestigt ist, die unmittelbar oder in einer steifen Verbindung am Meeresgrund angebracht ist, an dem das Rohr verankert werden soll, und die zweite Laufbuchse (3) über eine mechanische Kupplung (11) an der ersten Laufbuchse (2) befestigt ist, wobei die mechanische Kupplung (11) sicherstellt, daß jede Bewegung der ersten Laufbuchse (12) wenigstens teilweise an die zweite Laufbuchse (3) weitergegeben wird, wodurch die Bewegung der zweiten Laufbuchse (3) mit der Bewegung der ersten Laufbuchse und somit der Bewegung des starren Verbindungselements koordiniert wird.

2. Verankeruhgsanordnung nach Anspruch 1, **dadurch gekennzeichnet, daß** die mechanische Kupplung (11) an das starre Hauptverbindungselement (5) angeschlossen ist.

3. Verankerungsanordnung nach einem der Ansprüche 1 und 2, **dadurch gekennzeichnet, daß** das starre Verbindungselement (5) über eine Gelenkverbindung an der Hauptverankerungseinheit (6) befestigt ist.

4. Verankerungsanordnung nach Anspruch 3, **dadurch gekennzeichnet, daß** das starre Hauptverbindungselement (5) über eine Gelenkverbindung an der ersten Laufbuche (2) befestigt ist.

5. Verankerungsanordnung nach einem der Ansprüche 1 bis 4, **dadurch gekennzeichnet, daß** die zweite Laufbuchse (3) durch einen Laufbuchsenhalter (9) an die Verankerungseinheit (6) angeschlossen ist, wobei der Laufbuchsenhalter längs der Verankerungseinheit (6) bewegbar ist.

6. Verankerungsanordnung nach Anspruch 5, **dadurch gekennzeichnet, daß** die Verankerungseinheit (6) einen hervorragenden Boden (6a) aufweist, der dazu ausgelegt ist, auf dem Meeresboden (8) abgelegt zu werden, wobei der bewegbare Halter (9) an den hervorragenden Boden (6a) angeschlossen und längs des hervorragenden Bodens (6a) bewegbar ist.

7. Verankerungsanordnung nach einem der Ansprüche 1 bis 6, wobei die mechanische Kupplung ein oder mehrere zweite starre Verbindungselemente (14, 16, 17, 18) aufweist, die schwenkbar die zweite Laufbuchse (3) an die erste Laufbuchse (2) oder das starre Hauptverbindungselement (5) anschließen.

8. Verankerungsanordnung nach Anspruch 7, **dadurch gekennzeichnet, daß** für den Fall mehrerer zweiter starrer Verbindungselemente diese schwenkbar aneinander angeschlossen sind.

9. Verankerungsanordnung nach einem der Ansprüche 1 bis 8, wobei die mechanische Kupplung ein zweites starres Verbindungselement (14) aufweist, das die zweite Laufbuchse (3) schwenkbar an die erste Laufbuchse (2) oder das starre Hauptverbindungselement (5) anschließt.

10. Verankerungsanordnung nach Anspruch 9, wobei das zweite starre Verbindungselement (14) an die zweite Laufbuchse (3) und das starre Hauptverbindungselement (5) angeschlossen ist, wobei der Anschluß des zweiten starren Verbindungselements (14) an das starre Hauptverbindungselement (5) im wesentlichen in einem Abstand zu der Verbindung zwischen dem starren Hauptverbindungselement (5) und der Verankerungseinheit (6) liegt, wobei unter diesem Abstand wenigstens 10% der Länge des starren Hauptverbindungselements (5) zwischen den jeweiligen Anschlüssen zu der ersten Laufbuchse (3) und der Verankerungseinheit (6) zu verstehen sind.

11. Verankerungsanordnung nach einem der Ansprüche 1 bis 8, wobei die mechanische Kupplung (11) 3 zweite starre Verbindungselemente, ein zweites (16), ein drittes (17) und ein viertes (18) starres Element aufweist, wobei das zweite starre Element (16) schwenkbar an der ersten Laufbuchse (2) oder dem starren Hauptverbindungselement (5) oder an das vierte starre Element (18) angeschlossen ist, wobei das vierte starre Element ferner schwenkbar an die erste Laufbuchse (3) angeschlossen ist, und das dritte starre Element (17) die aneinander angeschlossenen zweiten und vierten starren Elemente schwenkbar an die Verankerungseinheit (15) anschließt.

12. Verankerungsanordnung nach Anspruch 11, **dadurch gekennzeichnet, daß** die Verankerungseinheit in einer zweiten Verankerungseinheit besteht.

13. Verankerungsanordnung nach einem der Ansprüche 11 und 12, **dadurch gekennzeichnet, daß** das zweite starre Element (16) schwenkbar an dem starren Hauptverbindungselement (5) im wesentlichen in einem Abstand zu der Verbindung zwischen dem starren Hauptverbindungselement (5) und der Verankerungseinheit (6) befestigt ist, wobei unter dem Abstand wenigstens 10% der Länge des starren Hauptverbindungselement (5) zwischen den jeweiligen Anschlüssen zu der ersten Laufbuchse (3) und der Verankerungseinheit (6) zu verstehen sind.

14. Verankerte flexible Rohrstruktur für den Transport eines Fluids zwischen dem Meeresgrund und der Meeresoberfläche, mit einer Biegebegrenzungs-Verankerungsanordnung nach einem der vorstehenden Ansprüche.

15. Verankerte flexible Rohrstruktur für den Transport eines Fluids zwischen dem Meeresgrund und der Meeresoberfläche, wobei die Struktur ein flexibles Rohr (1a, 1b, 1c) und eine Verankerungsanordnung zum Verankern des flexiblen Rohrs (1a, 1b, 1c) auf dem Meeresgrund (8) aufweist, wobei die Verankerungsanordnung eine erste (2) und eine zweite (3) Laufbuchse aufweist, die jeweils in Abstand voneinander an dem Rohr befestigt sind, wobei die erste Laufbuchse (2) über ein starres Hauptverbindungselement (5) schwenkbar an einer Hauptverankerungseinheit (6) befestigt ist, an der das Rohr dadurch verankert ist, und die zweite Laufbuchse (3) über eine mechanische Kupplung (11) an der ersten Laufbuchse (2) befestigt ist, wobei die mechanische Kupplung (11) Bewegungen von der ersten Laufbuchse (2) zu der zweiten Laufbuchse (3) übertragen kann, wodurch die Bewegung der zweiten Laufbuchse (3) und des starren Verbindungselements (5) miteinander koordiniert werden.

16. Verankerte Rohrstruktur nach Anspruch 15, wobei die Verankerungsanordnung wie in einem der Ansprüche 2 bis 13 angegeben ausgebildet ist.

17. Verankerte Rohrstruktur nach einem der Ansprüche 15 und 16, wobei das Rohr zwischen seinen beiden Enden am Meeresgrund (8) befestigt ist, wobei ein erstes Rohrende in Flüssigkeitsverbindung mit einer Untermeeresanlage steht, und ein zweites Rohrende in Flüssigkeitsverbindung mit einem Oberflächengefäß steht.

18. Verankerte Rohrstruktur nach Anspruch 17, wobei das Oberflächengefäß in einer schwimmenden Struktur besteht.

## Revendications

1. Agencement d'ancrage limitant la flexion destiné à ancrer une conduite souple (la, 1b, 1c), ledit agencement d'ancrage comprenant un premier (2) et un deuxième (3) manchons de retenue, chaque manchon de retenue, espacé l'un de l'autre, étant capable d'être fixé sur la conduite, ledit premier (2) manchon de retenue étant fixé de façon pivotante par l'intermédiaire d'un élément de raccordement principal rigide (5) à une unité d'ancrage principale (6) fixée directement ou dans un raccordement rigide aux fonds marins auxquels la conduite doit être ancrée, ledit deuxième (3) manchon de retenue étant fixé au premier (2) manchon de retenue par l'intermédiaire d'un couplage mécanique (11), lequel couplage mécanique (11) garantit qu'un quelconque mouvement fourni par le premier manchon de retenue (2) est au moins partiellement transféré vers le deuxième manchon de retenue (3), le mouvement du deuxième (3) manchon de retenue étant de ce fait coordonné avec le mouvement du premier manchon de retenue et de ce fait le mouvement de l'élément de raccordement rigide.

2. Agencement d'ancrage selon la revendication 1, **caractérisé en ce que** le couplage mécanique (11) est raccordé à l'élément de raccordement rigide principal (5).

3. Agencement d'ancrage selon l'une quelconque des revendications 1 ou 2, **caractérisé en ce que** l'élément de raccordement rigide principal (5) est fixé à l'unité d'ancrage principale (6) par un assemblage à charnière.

4. Agencement d'ancrage selon la revendication 3, **caractérisé en ce que** ledit élément de raccordement rigide principal (5) est fixé au premier (2) manchon de retenue par un assemblage à charnière.

5. Agencement d'ancrage selon l'une quelconque des revendications 1 à 4, **caractérisé en ce que** le deuxième manchon de retenue (3) est raccordé à l'unité d'ancrage (6) par un support de manchon (9), lequel support de manchon est mobile le long de l'unité d'ancrage (6).

6. Agencement d'ancrage selon la revendication 5, **caractérisé en ce que** ladite unité d'ancrage (6) comprend un plancher en saillie (6a) adapté pour être placé sur et le long des fonds marins (8), ledit support mobile (9) étant raccordé au plancher en saillie (6) et étant mobile le long du plancher en saillie (6a).

7. Agencement d'ancrage selon l'une quelconque des revendications 1 à 6, dans lequel le couplage mécanique comprend un ou plusieurs éléments de raccordement rigide secondaires (14, 16, 17, 18) raccordant de façon pivotante le deuxième (3) manchon de retenue au premier (2) manchon de retenue ou à l'élément de raccordement rigide principal (5).

8. Agencement d'ancrage selon la revendication 7, **caractérisé en ce que** lesdits éléments de raccordement rigide secondaires, s'ils sont supérieurs à un, sont raccordés de façon pivotante les uns à les autres

9. Agencement d'ancrage selon l'une quelconque des revendications 1 à 8, dans lequel le couplage mécanique comprend un élément de raccordement rigide secondaire (14) raccordant de façon pivotante le deuxième (3) manchon de retenue au premier (2) manchon de retenue ou à l'élément de raccordement rigide principal (5).

10. Agencement d'ancrage selon la revendication 9, dans lequel ledit élément de raccordement rigide secondaire (14) est raccordé au deuxième (3) manchon de retenue et à l'élément de raccordement rigide principal (5), ledit raccordement de l'élément de raccordement rigide secondaire (14) à l'élément de raccordement rigide principal (5) étant à une distance substantielle du raccordement entre l'élément de raccordement rigide principal (5) et l'unité d'ancrage (6), dans lequel une distance substantielle signifie au moins 10 % de la longueur de l'élément de raccordement rigide principal (5) entre les raccordements respectifs au premier (3) manchon de raccordement et à l'unité d'ancrage (6).

11. Agencement d'ancrage selon l'une quelconque des revendications 1 à 8, dans lequel le couplage mécanique (11) comprend 3 éléments de raccordement rigide secondaires, un deuxième (16), un troisième (17) et un quatrième (18) éléments rigides, dans lequel le deuxième (16) élément rigide est raccordé de façon pivotante au premier manchon de retenue (2) ou à l'élément de raccordement rigide principal (5), et au quatrième élément rigide (17), lequel quatrième élément rigide est en outre raccordé de façon pivotante au premier (3) manchon de retenue, le troisième élément rigide (17) raccordant de façon pivotante les deuxième et quatrième éléments rigides raccordés à une unité d'ancrage (15).

12. Agencement d'ancrage selon la revendication 11, **caractérisé en ce que** ladite unité d'ancrage est une unité d'ancrage secondaire.

13. Agencement d'ancrage selon l'une quelconque des revendications 11 et 12, **caractérisé en ce que** le deuxième (16) élément rigide est fixé de façon pivotante à l'élément de raccordement rigide principal (5), à une distance substantielle du raccordement entre l'élément de raccordement rigide principal (5) et l'unité d'ancrage (6), dans lequel une distance substantielle signifie au moins 10 % de la longueur de l'élément de raccordement rigide principal (5) entre les raccordements respectifs au premier (3) manchon de retenue et à l'unité d'ancrage (6).

14. Structure de conduite souple ancrée pour le transport d'un fluide entre des fonds marins et une surface de la mer, comprenant un agencement d'ancrage limitant la flexion selon l'une quelconque des revendications précédentes.

15. Structure de conduite souple ancrée pour le transport d'un fluide entre des fonds marins et une surface de la mer, ladite structure comprenant une conduite souple (1a, 1b, 1c) et un agencement d'ancrage destiné à ancrer la conduite souple (1a, 1b, 1c) aux fonds marins (8), ledit agencement d'ancrage comprenant un premier (2) et un deuxième (3) manchons de retenue, chaque manchon de retenue, espacés l'un de l'autre, étant fixé à la conduite, ledit premier (2) manchon de retenue étant fixé de façon pivotante par l'intermédiaire d'un élément de raccordement rigide principal (5) à une unité d'ancrage principale (6) à laquelle la conduite est de ce fait ancrée, ledit deuxième (3) manchon de retenue étant fixé au premier (2) manchon de retenue par l'intermédiaire d'un couplage mécanique (11), lequel couplage mécanique (11) peut transférer des mouvements depuis le premier manchon de retenue (2) vers le deuxième manchon de retenue (3), les mouvements du deuxième (3) manchon de retenue et de l'élément de raccordement rigide (5) étant de ce fait coordonnés l'un à l'autre.

16. Structure de conduite souple ancrée selon la revendication 15, dans laquelle ledit agencement d'ancrage est selon l'une quelconque des revendications 2 à 13.

17. Structure de conduite souple ancrée selon l'une quelconque des revendications 15 et 16, dans laquelle la conduite est fixée aux fonds marins (8) entre ses deux extrémités, une première extrémité de la conduite étant en raccordement fluidique avec une installation sous-marine, et une deuxième extrémité de la conduite étant en raccordement fluidique avec un bâtiment de surface.

18. Structure de conduite souple ancrée selon la revendication 17, dans laquelle le bâtiment de surface est une structure flottante.
